# EUROPEAN PATENT APPLICATION

(11) **EP 0 566 517 A1**
(43) Date of publication of application: **20.10.1993**
(21) Application number: 93500038.0
(22) Date of filing: 07.04.1993
(51) Int. Cl.: A47J 31/60

(54) **Coffee maker cup cleaning apparatus**

(30) Priority: 09.04.1992 ES 9200755
(71) Applicant: Vargas Vargas, Felisa, E-08940 Cornella de Llobregat (Barcelona) (ES)
(72) Inventor: Vargas Vargas, Felisa, E-08940 Cornella de Llobregat (Barcelona) (ES)
(74) Representative: Alonso Langle, Emilio

(57) **Abstract**

The apparatus consists of a duct (16) ending in a nozzle (4) fitting the cup (5) to be cleaned, and at the location of said nozzle (4), the inside of said duct features a cutter (9) driven by a motor (23) which in turn also drives a suction turbine (17) set inside the duct (16) itself, in charge of pulling the coffee grounds crumbled inside the cup (5) by the cutter (9) towards a bag (14), preferably lining a container (20) whose lid (21) is equipped with a number of decompression vents (22).

## Description

### OBJECT OF THE INVENTION

This invention is an apparatus especially designed for quickly, simply and efficiently cleaning the cups that hold ground coffee in espresso coffee makers (i.e., in industrial or professional coffee makers) after the beverage has been obtained.

### FORERUNNERS OF THE INVENTION

As is well-known, coffee makers of the aforementioned type use cups equipped with a side handle or shaft, which cups may be secured with a bayonet to their operating heads on the coffee maker after each cup is filled with a measure of ground coffee. The beverage is obtained when steam from the said head is forced into the cup, condenses upon contact with the coffee, and creates the beverage, which drips through the bottom channels with which the said cup is furnished. Each time the cup is reused, the damp mass of coffee grounds must be eliminated and replaced with a fresh measure.

Heretofore it is commonplace for the user to rap the upside-down bowl against the edge of a collector in order to knock loose the steam-compressed grounds which fall, emptying the bowl.

No machine, apparatus or device is known to exist which frees the user from such a primitive procedure for emptying the bowl, and everywhere the world over one may see and hear the repeated raps as to-be-emptied coffee ground cups are knocked against an often decorated edge.

Apart from the rudimentariness of the system, it should be noted that not all the used grounds always fall out, and one way or another the interior of the cup always retains remains which reduce the cup's capacity for holding fresh ground coffee; therefore this system cannot guarantee beverage quality.

Furthermore, the coffee remains adhering to the walls accumulate and must be scraped outwith a suitable tool and then washed, for otherwise there is a danger that, as in fact frequently occurs, the coffee will not only become bitter but will also gain a stale or odd taste that makes it unappetizing.

### DESCRIPTION OF THE INVENTION

The cup cleaning apparatus herein proposed is intended to complement coffee makers, as, for example, coffee grinders and measurers currently do; but here the apparatus has the specific goal of ensuring quick, simple, efficient, thorough cleaning of the cup, eliminating all the problems mentioned above.

In order to do so, said apparatus is based on a suction duct suitably installed in a head. This suction duct will have the correct shape and size to fit in the mouth of the cup. Inside, said duct holds a cutter of the correct shape and size in turn to fit into the inner surface of the cup, and made of an appropriate material so as to loosen the mass of damp grounds from the cup without damaging said cup. Said duct shall be suitably connected to an extractor able to generate enough suction to extract all loose particles of coffee from inside the cup, leaving the cup thoroughly clean, and depositing the grounds in the proper bag.

In accordance with another characteristic of the invention, the cutter and the extractor or suction turbine are driven by a sole motor through an appropriate transmission system.

In accordance with another characteristic of the invention, the aforesaid head housing the apparatus's operating mechanisms may incorporate a suction tube that bends along a semi-circumferential curve, with its discharge leg extending far downward. This tube may be installed as part of a tabletop facility; when suitably set into a counter, its outlet leg, which houses the suction turbine, is coupled to a tube running through said counter, underneath which it opens into a container which may be lined with a bag. The lid of said container may be furnished with decompression holes in order to ensure the efficiency of the suction turbine.

### DESCRIPTION OF DRAWINGS

In order to complement the description made herein and for the purpose of providing a better understanding of the characteristics of the invention, this descriptive report includes, as an integral part hereof, a set of drawings providing the following nonrestrictive illustrations:
Figure 1. This is a partly-sectioned side elevational diagram of a coffee maker cup cleaning apparatus constructed in accordance with the object of this invention.
Figure 2. This is also a sectional side elevation of the same apparatus, with a variation in execution, in which the apparatus is shown in greater detail.

### PREFERRED EXECUTION OF THE INVENTION

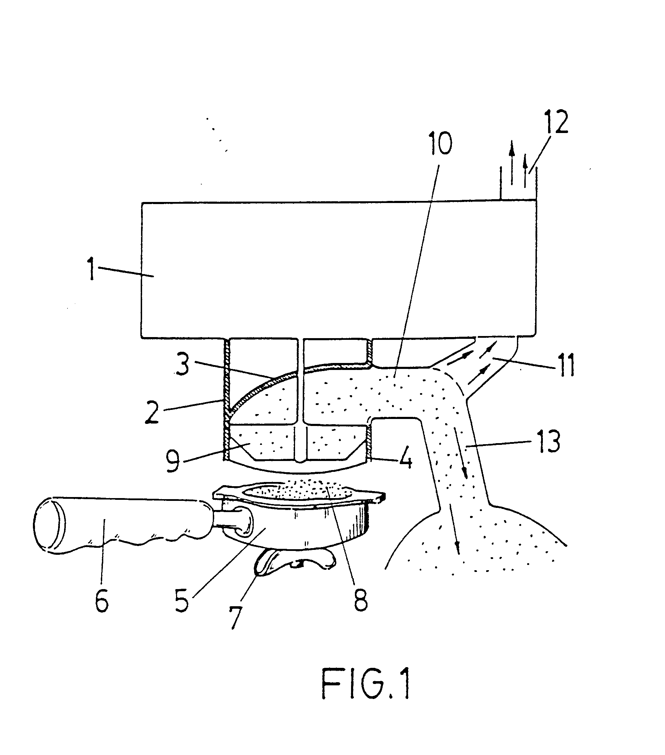

In view of these figures, more specifically figure 1, it may be seen how the coffee maker cup cleaning apparatus proposed herein is built around a housing or head (1) equipped with a downward extension (2) to which a suction duct (3) is attached. This suction duct ends in a nozzle end (4) that fits the mouth of the cup (5) to be cleaned. The cup is of the conventional sort, featuring the classic handle (6) and bottom channels (7) for carrying the beverage obtained at the expense of the damp, compacted coffee grounds (8) left in said cup (5).

Inside the nozzle end (4) is a cutter (9) which is, in turn, of the correct shape and size to fit into the cup (5) and is made of a suitable material in order not to damage said cup. This cutter has the job of removing and breaking up the residual mass (8) of coffee grounds so that said broken-up grounds will be forced, by the cutter's own centrifugal force and the suction provided through the duct (3) generated by a turbine not shown in figure 1, through the side pipe (10) to a fork. At said fork the air sucked by the turbine inside the housing or head (1) rises through a pipe (11) to its outlet (12), while the grounds fall, pulled by gravity down a branch pipe (13) to a bag (14).

As said above, although not depicted in figure 1, inside the head (1) are the motor driving the cutter (9) and the aforesaid air suction turbine, driven by the same motor.

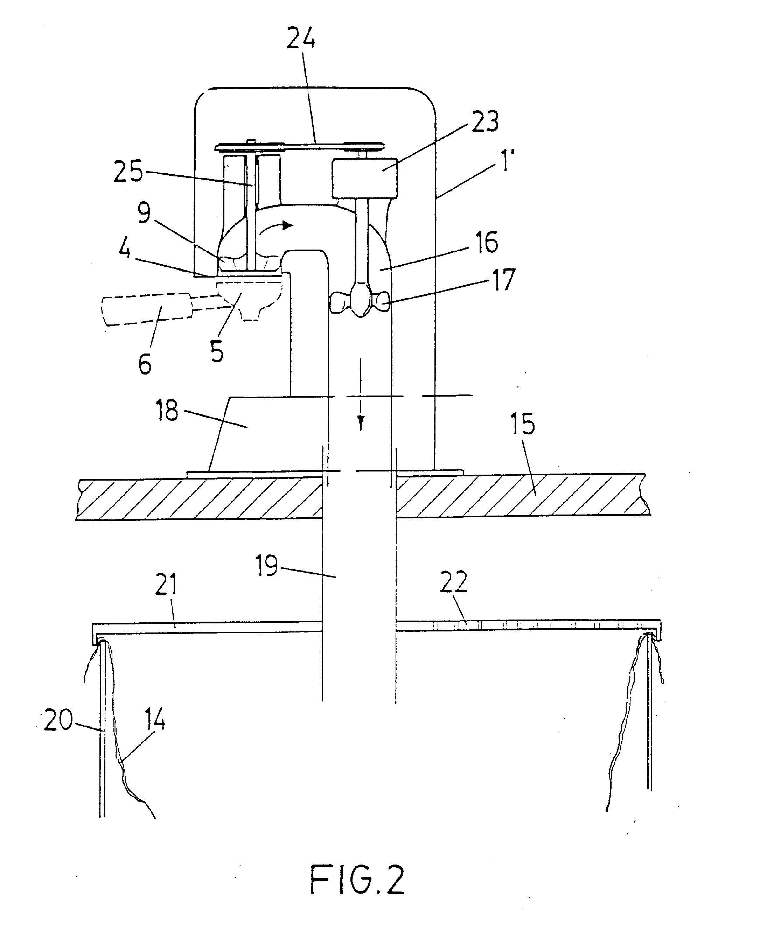

In accordance with the variation in execution in figure 2, the head (1') is a tabletop facility which may be set into and attached to a counter (15) or any other appropriate surface. Inside the head is a pipe (16) tracing an approximately semi-circumferential curve with its concave section facing downward. One leg of said pipe is extremely short, ends in the aforesaid nozzle (4) fitting the cup (5), and incorporates the also aforesaid cutter (9); while the other leg, considerably longer, houses the suction turbine (17) and runs vertically through the head (1) until it pierces the head's lower base (18) where it is set into the counter (15). Here, through an auxiliary pipe (19) running through said counter, said leg communicates with the bag (14). Here said bag lines a container (20) with a lid (21) provided with a number of decompression vents (22), that is, holes through which the air propelled into the bag (14) by the suction turbine (17) may be released.

This practical execution depicted in figure 2 not only shows the suction turbine (17) but also the motor (23) driving said turbine, located inside the head (1'). The transmission belt (24) transmits the motion of said motor to the shaft (25) of the cutter (9), such that this one motor (23), as stated above, simultaneously drives the cutter (9) and the suction turbine (17) and, since it is a low-power motor, consumes little electricity.

Obviously there is also the possibility of using a compressor or Venturi-type application to suck up the coffee grounds loosened from the cup (5) by the cutter (9), but these solutions have been ruled out here because of their greater complexity and cost.

Lastly, it remains only to indicate that a push button may be installed in an appropriate spoton the nozzle (4) so that the motor (23) is started up merely by coupling the cup (5) to the machine, and stopped when the cleaned cup is removed.

No further description is considered necessary in orderforany expert on the subject to grasp the scope of the invention and the advantages stemming from it.

The materials, shape, size and placement of the components may vary provided that such variations do not alter the essence of the invention.

The terms used herein must be taken always in a broad, nonrestrictive sense.

## Claims

1. Coffee maker cup cleaning apparatus specifically for eliminating the mass of damp, compacted coffee grounds which are the waste product left in the cup after the beverage is obtained, wherein said apparatus is built around a head (1-1') containing a suction duct (3-16) ending at one extreme in a nozzle end (4) fitting the mouth of the cup (5) to be cleaned, while the other extreme of said duct (3) opens into a bag (14) for collecting coffee grounds; and inside the aforesaid duct, to be more specific, where the nozzle (4) fitting the cup (5) is located, there is a cutter (9) driven by the proper motor (23) to crumble the compacted grounds held inside the cup, for which purpose the cutter shall be shaped and built to match said cup; and working with said cutter is a suction turbine (17) generating a current of air inside the duct (3-16) to pull the loosened grounds from the cup into the bag (14).

2. Coffee makercup cleaning apparatus as setforth in claim 1 above, wherein the cutter (9) and the suction turbine (17) are driven by a sole motor (23) by means of an appropriate transmission system.

3. Coffee makercup cleaning apparatus as setforth in the claims above, wherein the suction turbine (17) is set either in the pipe channeling the waste towards the bag (14) or in a side branch (11) of said pipe sufficiently far from the cutter's working area for the waste to fall, pulled by gravity, toward a lower pipe communicating with the bag (14).

4. Coffee makercup cleaning apparatus as setforth in the claims above, wherein the aforesaid head (1') is supported by a sill (18) whereby the head is set into the counter (15); the waste eliminating pipe (16) runs through said sill, emerging underneath and outside the apparatus and communicating through an auxiliary pipe (19) with the bag (14) lining a container(20) provided with a lid (21) equipped with a number of decompression holes (22).
